# EUROPEAN PATENT SPECIFICATION

(11) **EP 1 571 948 B1**
(45) Date of publication and mention of the grant of the patent: **30.08.2006**
(21) Application number: 03775110.4
(22) Date of filing: 28.11.2003
(51) Int. Cl.: A47C 27/06, F16F 1/36

(54) **A RESILIENT INSERT FOR UPHOLSTERY**
ELASTISCHE EINLAGE FÜR POLSTERUNG
PIECE ELASTIQUE POUR REMBOURRAGE

(30) Priority: 29.11.2002 DK 200201846
(43) Date of publication of application: 14.09.2005
(73) Proprietor: Buttenschön, Per, 6700 Esbjerg (DK)
(72) Inventor: OSTERGAARD, Steen, F-06200 Nice (FR)
(74) Representative: Larsen, Hans Ole
(86) International application number: PCT/DK2003/000816
(87) International publication number: WO 2004/049873

(56) References cited:
- EP-A- 0 223 617
- GB-A- 614 133
- GB-A- 2 055 173
- US-A- 5 927 696

## Description

### State of the art

The invention relates to a resilient insert for the production of a support, such as a mattress, seat and the like, which insert may be enclosed by a cover to form a finished mattress, and where the springs thereof are made of elastic resin of a cross-sectional shape which at the top and at the bottom extends essentially horizontally and mutually in parallel and with wave shape extending therebetween to form the resilient element, said springs being provided with transverse slots through the entire spring.

Inserts of this type are traditionally made of steel springs which, placed on edge, constitute the resilient insert, and which are subsequently enclosed by a cover to form the finished mattress or support.

The problem of such a mattress is that it is difficult to wash and disinfect, since it does not tolerate machine hot wash. This restricts its properties for use e.g. in hospitals, it being a problem if the mattress cannot tolerate cleaning - apart from the cover which is washable.

The hygiene requirements are so great today that mattresses must be capable of tolerating hot wash owing to the sterilization, cleaning, after use.

To meet this requirement, the steel springs must be confined in completely closed sleeves, which makes the manufacture of such mattresses both cumbersome and expensive.

To remedy this drawback, it is known to make the resilient insert of resin. An example of this is known from GB 2 055 173. The resilient insert disclosed by this document is made by extrusion in a piece of resin comprising a plurality of plane upper and lower sections which are connected by a wave-shaped intermediate member.

This prior art insert may be cleaned by hot wash, but it is vitiated by the drawback that it does not give the same comfort as is known from a spiral spring insert. The reason is the rigid profile which cannot yield sufficiently in the transverse direction, as the individual webs at the top and at the bottom cannot yield noticeably.

To this should be added that the entire insert is made by extrusion, which makes it difficult to produce inserts with zone supports of a harder type - preferably at the centre - and softer zones around. As a result, the mattress cannot be dimensioned to achieve the necessary comfort.

### Object of the invention

The object of the invention is to remedy these defects and drawbacks, and this is achieved according to the invention when the slot comprises through-going slots as well as partial slots extending therebewteen which extend from the upper side edges of the spring elements and a distance inwards.

In this surprisingly simple manner it is possible to construct a resilient insert by means of such a spring which in every way gives the same comfort as spring inserts do, as the individual springs constitute an independent, movable portion between the slots in the profile.

To this should be added that it is possible to combine springs having different degrees of resilience in the individual spring elements, which allows construction of a mattress with a support which may be adapted both with respect to resilience and to position.

Finally, this mattress is fully capable of withstanding the impacts from hot wash and therefore meet every requirement made with respect to easy-to-clean and disinfectable mattresses.

When, as stated in claim 2, to shape the resilient intermediate member with an even resiliency an equally sized faces on each side of the bending line is obtained.

When, as stated in claim 3, to shape a V-shaped groove which obtains a horizontal movability and thus supports the face vertical movability of the resilient portions.

When, as stated in claim 4, the locking means comprise a tongue and groove joint with locking engagement, the joint may be provided simply by pressing adjacent elements together without any risk that they can subsequently be separated.

When, as stated in claim 5, the locking means are formed as pins engaging with holes, a high degree of movability and thus resilience in the longitudinal direction of the elements is achieved.

Finally when, as stated in claims 6 and 7, part of the channel for the carrier rail extends uninterruptedly on the lower side, a suitable rigidity of the support and a good carrying capacity are achieved.

### The drawing

Examples of resilient inserts according to the invention will be described more fully below with reference to the drawing, in which
- fig. 1: shows an example of a complete insert for a mattress seen from above,
- fig. 2: shows an insert seen from above on an enlarged scale,
- fig. 3: shows a spring element seen in perspective with a pin joint,
- fig. 4: shows a close-up of the pin joint on an enlarged scale,
- fig. 5: shows a close-up of the channel for the carrier rail on an enlarged scale,
- fig. 6: shows a spring element seen in perspective with a tongue and groove joint,

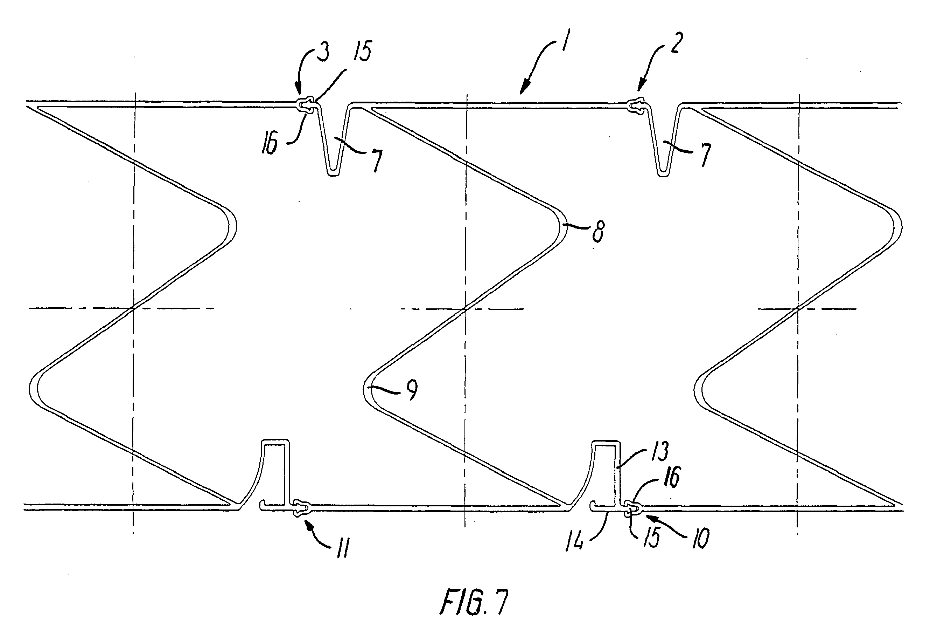

- fig. 7: shows a lateral view of joined spring elements with a tongue and groove joint, and
- fig.8: shows a close-up of the tongue and groove joint on an enlarged scale.

### Description of examples

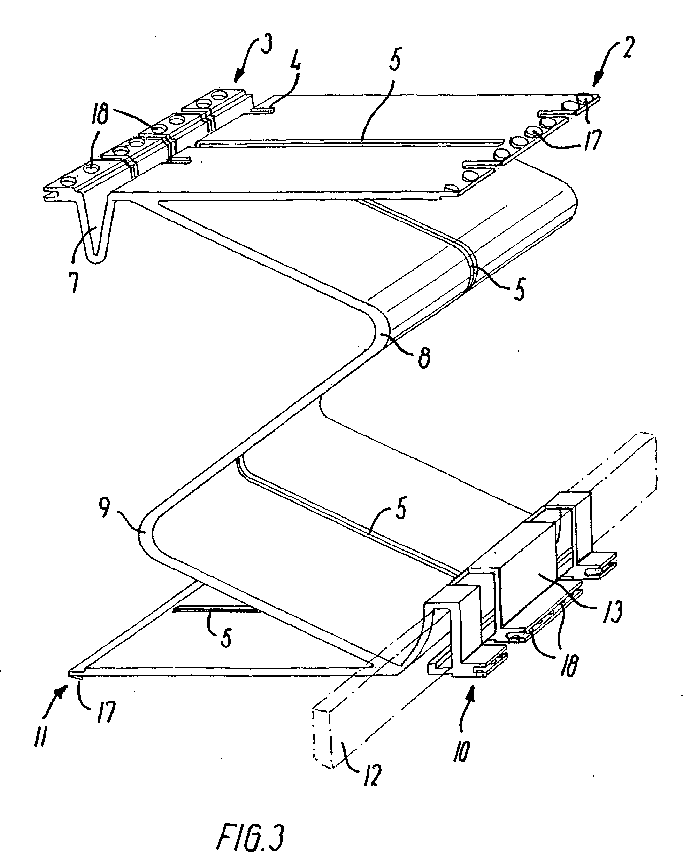

A first example of an embodiment of the resilient element is shown in fig. 3, which is an element preferably made by moulding in sections, elements, with the appearance as shown.

The profile comprises a horizontally extending upper member with locking means along its two side edges and with a trough portion 7 between the locking means and the horizontally extending member.

A wave-shaped intermediate member extends from the trough profile, having two bending lines 8 and 9 in the example shown.

The member ends at the lower member which extends in parallel with the upper member.

The lower member is formed with a receiving section at a bend 13 which extends upwards, and which is dimensioned to receive a through-going rail 12 which preferably extends through all the elements 6 in the same row. The rail is intended to receive the weight of the mattress and thereby replace the usual bed bottoms.

The lower portion 14, which forms the bottom of the channel, is terminated with an upwardly protruding holding rib to maintain the position of the rail 12 in the insert.

This element is provided with one or more gaps 5 which extend through the entire element, apart from the outermost edge portion where the locking means are positioned.

In addition to these through-going gaps 5, short gaps 4 are moreover provided which extend essentially close to the side edge and through the locking means.

The purpose of these gaps 4, 5 is to make the element elastic in the longitudinal direction, thereby allowing the elements to absorb loads in several directions when affected from above, without the individual face members of the elements interfering with the movability of the elements.

As indicated in fig. 3, the two resilient intermediate bends 8, 9 are made somewhat stronger in order to be able to absorb the loads to which the elements are subjected from above.

As a result, a resilient insert is achieved which has a spring force uniform in practice in the entire path of movement of the element, as is known from prior art spiral spring inserts.

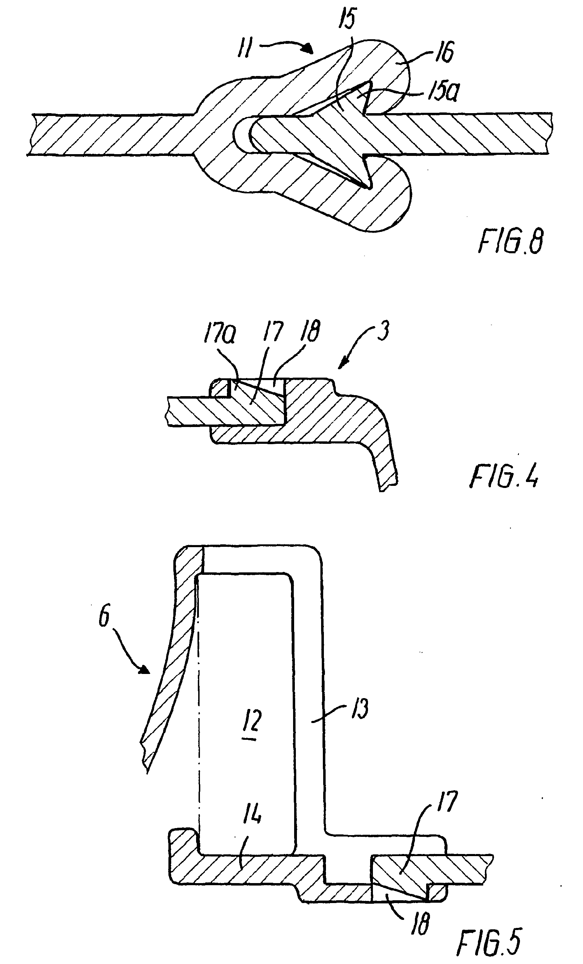

The element shown in fig. 3 is preferably made by moulding, and it is therefore provided with locking means which will be described with reference to figs. 4 and 5.

Fig. 4 shows a section through the uppermost joint 3, which is on the left side in fig. 3, and which comprises a slot facing outwards to receive the right side edge of the adjacent element.

At the top, the slot is formed with a plurality of holes 18 which constitute the receiving part for a plurality of upwardly extending pins 17 with an inclined upper side for a snap-like engagement, as shown in fig. 3, when the parts to be joined are pushed together.
These joining means are also provided at the opposite side at the top and at both sides at the bottom corresponding to the examples shown in figs. 3, 4 and 5.

Adjacent elements may hereby be locked together both at the top and at the bottom to form a contiguous insert.

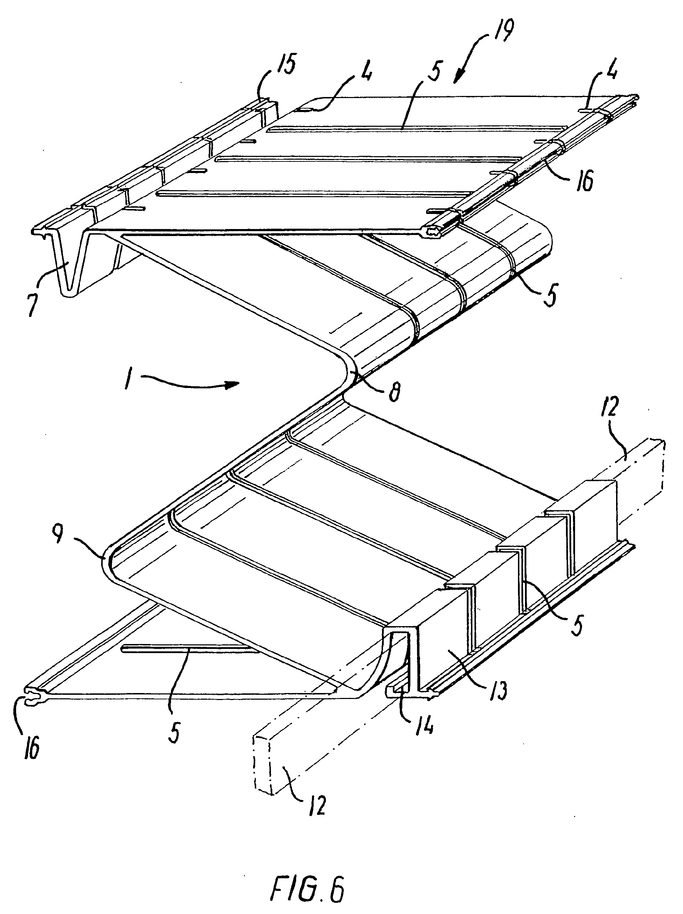

An example of an extruded element will now be described with reference to figs. 6 and 8.

The profile itself essentially corresponds to the profile mentioned above, except that it may be made in long webs and also be provided with other locking means.

These locking means may be configured as shown in fig. 8 and comprise a spring 15 with hooks 15a which may be inserted into a groove 16 with cooperating hooks 16a. This locking system may be provided at the top as well as at the bottom, as indicated in fig. 6.

Both embodiments may moreover have locking means which are recessed relative to the upper face and thereby the surface of the entire insert, as the joints 2, 3 may be level with or slightly below the surface of the insert, so that the joints cannot be felt when the mattress is used.

Instead of the locking means described, the joints may optionally be made by gluing or fusion of the locking parts.

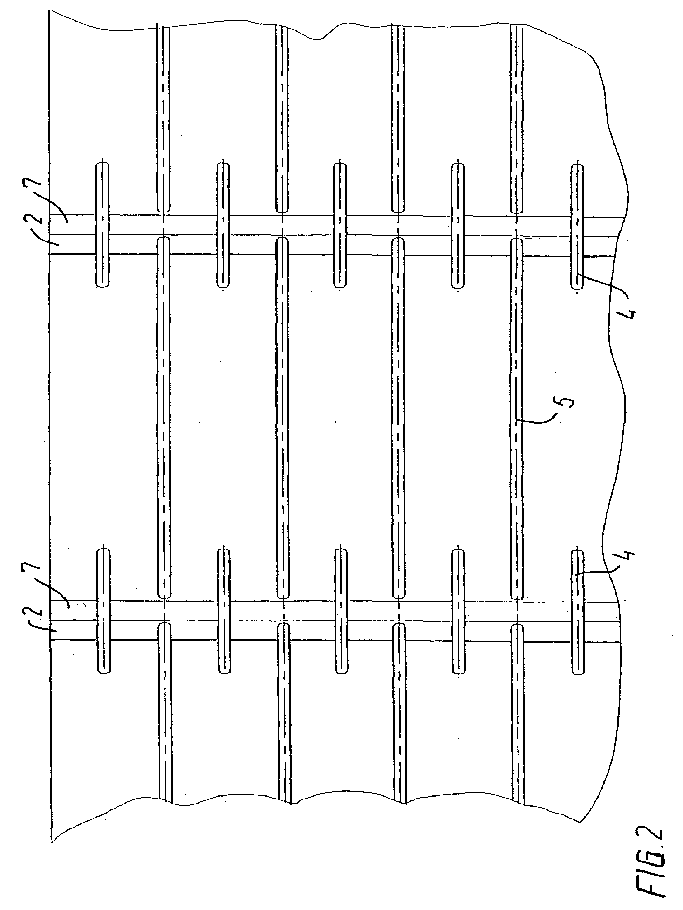

The extent and the number of slots 4 and 5 may be varied of course according to the type of material and the dimensions of the profile. The purpose is to be able to control the recess and the spring force which are desirable to achieve the best position of rest and comfort.
After assembly, the individual elements will appear as shown in fig. 2. The drawing shows the uniform surface with a high degree of movability of the individual sections. This applies longitudinally because of the slots 4 and 5 as well as transversely because of the downwardly facing trough portion 7 when the joints 2 and 3 have been established.

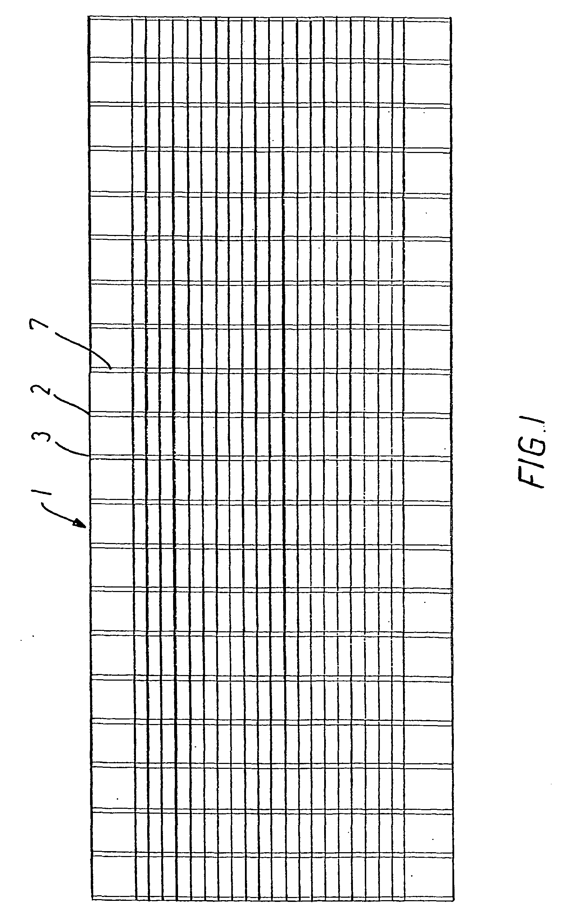

A complete insert for a mattress is shown in fig. 1, which shows a plurality of rows 1 seen from above and held together to form the contiguous insert.

After the joining of the elements, the transverse members 12 are introduced, following which these will serve as the carrying element for the insert. Then a cover may enclose the insert, either with or without an intermediate layer to increase the softness of the surface.

Such a mattress will be suitable for running through a washing process, e.g. in a through-flow washing machine at a hot wash temperature. In use, the mattress will have the same properties as the known spring mattresses, but as mentioned, will be more hygienic in use as it can be disinfected without any adverse impact on the properties of the mattress.

## Claims

1. A resilient insert for the production of a support, such as a mattress, seat and the like, which insert may be enclosed by a cover to form a finished mattress, said insert being comprised of springs, wherein said springs are made of an elastic resin of a cross-sectional shape which at the top and at the bottom extends essentially horizontally and mutually in parallel and with a wave shape extending therebetween to form the resilient element, said springs being provided with transverse slots through the entire spring, **characterized in that** the slots comprise through-going slots (5) as well as partial slots (4) extending therebetween which extend from the upper side edges (2, 3) of the spring elements (1) and a distance inwards.

2. A resilient insert according to claim 1, **characterized in that** each of the springs (1) comprises a single wave with two bending lines (8, 9) to receive the vertical movability, and is provided with locking means at the top (2, 3) and at the bottom (10, 11) to join adjacent springs (1) and thereby to form the complete spring insert.

3. A resilient insert according to claims 1 and 2, **characterized in that** a groove (7) is provided along the upper side along one side edge of the springs to receive the horizontal movability.

4. A resilient insert according to claim 2, **characterized in that** the locking means respectively comprise a tongue and a groove at each side edge at the top and at the bottom of the spring, said tongue (15) having barbs (15a) to be pressed into receiving tracks (16a) in the groove (16).

5. A resilient insert according to claim 4, **characterized in that** the locking means respectively comprise a plurality of upwardly facing pins (17) on the tongue to engage with a plurality of cooperating holes (18) in the groove

6. A resilient insert according to claims 2-5, **characterized in that** a channel (13) is provided along the lower side to receive a carrier (12) which constitutes the carrying element in the support.

7. A resilient insert according to claim 6, **characterized in that** the channel (13) partially encloses the rail (12), and that it is through-going uninterruptedly on the lower side (14).

## Patentansprüche

1. Elastische Einlage für die Herstellung einer Unterlage, beispielsweise einer Matratze, eines Sitzes und dergleichen, wobei die Einlage von einer Hülle umschlossen sein kann, um eine fertige Matratze zu bilden, und Federn aufweist, wobei die Federn aus einem elastischen Harz mit einer Querschnittsform hergestellt sind, die sich an der Oberseite und an der Unterseite im wesentlichen horizontal und zueinander parallel erstreckt und mit einer sich dazwischen erstreckenden Wellenform versehen ist, um das elastische Element zu bilden, und die Federn mit transversalen Schlitzen durch die gesamte Feder versehen sind, **dadurch gekennzeichnet, dass** die Schlitze durchgehende Schlitze (5) sowie sich dazwischen erstreckende partielle Schlitze (4) aufweisen, die sich von den oberen Seitenkanten (2, 3) des Federelementes (1) und mit einem Abstand nach innen erstrecken.

2. Elastische Einlage nach Anspruch 1, **dadurch gekennzeichnet, dass** jede der Federn (1) eine einzelne Welle mit zwei Kurvenlinien (8, 9) aufweist, um die vertikale Beweglichkeit zu erhalten, und mit Verriegelungseinrichtungen an der Oberseite (2, 3) und der Unterseite (10, 11) versehen ist, um sich mit benachbarten Federn (1) zu verbinden und dadurch die vollständige Federeinlage zu bilden.

3. Elastische Einlage nach Ansprüchen 1 und 2, **dadurch gekennzeichnet, dass** eine Rinne (7) entlang der oberen Seite entlang einer Seitenkante der Federn vorgesehen ist, um die horizontale Beweglichkeit zu erhalten.

4. Elastische Einlage nach Anspruch 2, **dadurch gekennzeichnet, dass** die Verrieglungseinrichtungen eine Lasche und eine Rinne an jeder Seitenkante an der Oberseite und an der Unterseite der Feder aufweisen, wobei die Lasche (15) Widerhaken (15a) aufweist, die in aufnehmenden Rillen (16a) in der Rinne (16) eingedrückt werden.

5. Elastische Einlage nach Anspruch 4, **dadurch gekennzeichnet, dass** die Verriegelungseinrichtungen eine Vielzahl aufwärts weisender Stifte (17) an der Lasche aufweisen, die in eine Vielzahl zusammenwirkender Löcher (18) in der Rinne eingreifen.

6. Elastische Einlage nach Ansprüchen 2 bis 5, **dadurch gekennzeichnet, dass** ein Kanal (13) entlang der unteren Seite vorgesehen ist, um einen Träger (12) aufzunehmen, der das tragende Element in der Unterlage bildet.

7. Elastische Einlage nach Anspruch 6, **dadurch gekennzeichnet, dass** der Kanal (13) teilweise die Schiene (12) umschließt und ununterbrochen an der unteren Seite (14) durchgeht.

## Revendications

1. Pièce élastique pour la production d'un support, tel qu'un matelas, un siège ou assimilé, laquelle pièce pouvant être entourée par une housse pour former un matelas fini, ladite pièce étant composée de ressorts, dans laquelle lesdits ressorts sont réalisés dans une résine élastique ayant une forme en coupe qui, au sommet et à la base, s'étend de façon horizontale et mutuellement parallèle et avec une forme ondulée s'étendant entre le sommet et la base pour former la pièce élastique, lesdits ressorts étant munis de fentes transversales à travers le ressort entier, **caractérisé en ce que** les fentes comprennent des fentes traversantes (5) aussi bien que des fentes partielles (4) lesquelles s'étendent entre les précédentes depuis les bords latéraux supérieurs (2, 3) des éléments de ressort (1) et à une certaine distance vers l'intérieur.

2. Pièce élastique selon la revendication 1, **caractérisée en ce que** chacun des ressorts (1) comprend une ondulation unique avec deux lignes de courbure (8, 9) pour recevoir la mobilité verticale, et est muni de moyens de verrouillage au sommet (2, 3) et à la base (10, 11) pour joindre les ressorts adjacents (1) et former de la sorte la pièce élastique complète.

3. Pièce élastique selon les revendications 1 et 2, **caractérisée en ce qu'**une rainure (7) est disposée le long du côté supérieur le long d'un bord latéral des ressorts pour recevoir la mobilité horizontale.

4. Pièce élastique selon la revendication 2, **caractérisée en ce que** le moyen de verrouillage comprend respectivement une languette et une rainure à chaque bord latéral au sommet et à la base du ressort, ladite languette (15) présentant des crochets (15a) pour être serrée dans des pistes réceptrices (16a) dans la rainure (16).

5. Pièce élastique selon la revendication 4, **caractérisée en ce que** le moyen de verrouillage comprend respectivement plusieurs picots dirigés vers le haut (17) sur la languette destinés à s'engager avec plusieurs trous correspondants (18) dans la rainure.

6. Pièce élastique selon les revendications 2 à 5, **caractérisée en ce qu'**un canal (13) est disposé le long du côté inférieur pour recevoir un rail (12) qui constitue l'élément de soutien dans le support.

7. Pièce élastique selon la revendication 6 **caractérisée en ce que** le canal (13) contient partiellement le rail (12) et **en ce qu'**elle traverse de façon ininterrompue le côté inférieur (14).
